# EUROPEAN PATENT APPLICATION

(11) **EP 3 220 654 A1**
(43) Date of publication of application: **20.09.2017**
(21) Application number: 15859212.1
(22) Date of filing: 24.06.2015
(51) Int. Cl.: H04N 21/472, H04N 5/45

(54) **IMAGE DISPLAY DEVICE**

(30) Priority: 12.11.2014 KR 20140157404
(71) Applicant: LG Electronics Inc., Seoul 150-721 (KR)
(72) Inventor: SON, Chulmin, Seoul 137-893 (KR)
(74) Representative: Beyer, Andreas
(86) International application number: PCT/KR2015/006450
(87) International publication number: WO 2016/076502

(57) **Abstract**

The present invention relates to an image display device. The image display device according to an embodiment of the present invention comprises: a display; an interface to exchange data with an external server; and a controller to execute a web browser according to a web screen display input, to control a first webpage to be displayed on the display based on data received from a server, and when a first link item in the first webpage is selected, to control the first webpage to be displayed in a first area and a second webpage corresponding to the first link item to be displayed in a second area adjacent to the first area. Thereby, it is possible to display a plurality of webpages on a single screen.

## Description

### [Technical Field]

The present invention relates to an image display device and, more specifically, to an image display device capable of displaying a plurality of webpages on a single screen.

### [Background Art]

Image display devices have a function of providing images that users can view. Users can view broadcasts through image display devices. Image display apparatuses provide broadcasts selected by a user from broadcast signals transmitted from broadcasters and such broadcast images are displayed on displays. Broadcasting tends to change from analog broadcast to digital broadcast worldwide.

Digital broadcast refers to broadcasts transmitting digital video and audio signals. Digital broadcast is robust against external noise and thus has low data loss, is suitable for error correction, has high resolution and provides high-definition images, compared to analog broadcast. Furthermore, digital broadcast provides an interactive service distinguished from analog broadcast.

### [Disclosure]

### [Technical Problem]

An object of the present invention devised to solve the problem lies in an image display apparatus capable of displaying a plurality of webpages on one screen.

### [Technical Solution]

The object of the present invention can be achieved by providing an image display device including: a display; an interface to exchange data with an external server; and a controller to execute a web browser according to a web screen display input, to control a first webpage to be displayed on the display based on data received from the server, and when a first link item in the first webpage is selected, to control the first webpage to be displayed in a first area, and to control a second webpage corresponding to the first link item to be displayed in a second area adjacent to the first area.

Furthermore, an image display device according to an embodiment of the present invention to accomplish the object includes: a display; an interface to exchange data with an external server; and a controller to execute a web browser according to a web screen display input, to control a first webpage to be displayed as a full screen on the display based on data received from the server, and when a first link item in the first webpage is selected, to control the first webpage to be decreased in size and displayed in a left area of the display, and to control a second webpage corresponding to the first link item to be displayed in a right area of the display adjacent to the first area.

### [Advantageous Effects]

According to an embodiment of the present invention, the image display device can include a display, an interface to exchange data with an external server, and a controller to execute a web browser according to a web screen display input, to control a first webpage to be displayed on the display based on data received from the server, and when a first link item in the first webpage is selected, to control the first webpage to be displayed in a first area, and to control a second webpage corresponding to the first link item to be displayed in a second area adjacent to the first area, thereby displaying a plurality of webpages on a single screen.

Particularly, when the first link item in the first webpage is selected, the second webpage corresponding to the first link item can be displayed in the second area adjacent to the first area, to thereby improve user convenience when a news-related webpage is displayed.

Furthermore, it is possible to improve readability of a webpage corresponding to a pointer by enlarging and displaying one of the first and second webpages depending on the position of the pointer.

### [Description of Drawings]

FIG. 1A illustrates an exemplary image display system related to the present invention.
FIG. 1B illustrates another exemplary image display system related to the present invention.
FIG. 2 is an example of a block diagram of an image display apparatus of FIG. 1A.
FIG. 3 is a block diagram of a controller of FIG. 2.
FIG. 4 illustrates a method of controlling a remote controller of FIG. 2.
FIG. 5 is a block diagram of the remote controller of FIG. 2.
FIGS. 6A to 6C illustrate display of webpages on an image display apparatus.
FIG. 7 is a flowchart illustrating an example of an operating method of an image display apparatus according to an embodiment of the present invention.
FIGS. 8A to 16E are diagrams for explaining the operating method of FIG. 7.

### [Best Mode]

The present invention will be described in more detail with reference to the attached drawings.

The terms "module" and "unit" or "part" used to signify components in the following description are used herein to aid in understanding of the components and thus they should not be considered as having specific meanings or roles. Accordingly, the terms "module" and "unit" or "part" may be used interchangeably.

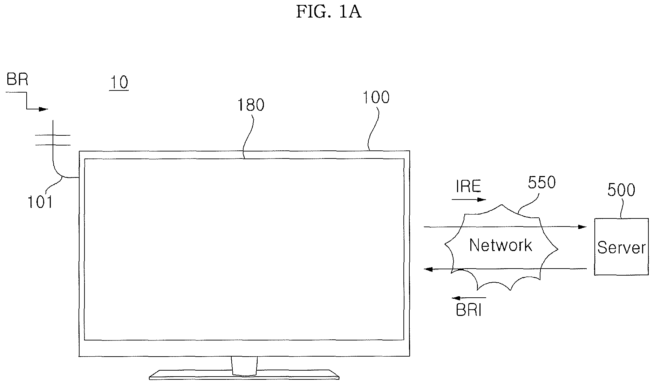

FIG. 1A illustrates an exemplary image display system related to the present invention.

Referring to the figure, the image display system 10 may include an image display apparatus 100 and a server 500.

The image display apparatus 100 may receive a broadcast signal BR through an antenna 101, process the received broadcast signal, provide broadcast images and display the broadcast images. To this end, the image display apparatus 100 may include a display 180.

That is, the image display apparatus 100 of FIG. 1A may include a TV, a monitor or the like.

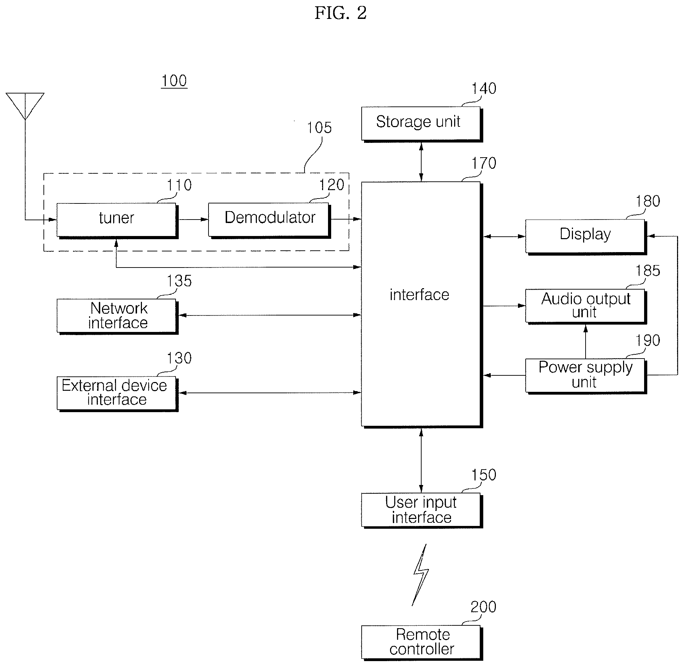

The image display apparatus 100 may exchange data with the server 500 through a network interface (135 of FIG. 2). Particularly, the image display apparatus 100 may exchange data with the server 500 through a network 550.

Specifically, the image display apparatus 100 may execute a web browser according to web screen display input, transmit a webpage information request IRE to the server 500 and receive webpage screen information BRI form the server 500.

The image display apparatus 100 may drive the web browser according to web screen display input and display a first webpage 820 on the display 180 on the basis of the webpage screen information BRI that is data received from the server 500.

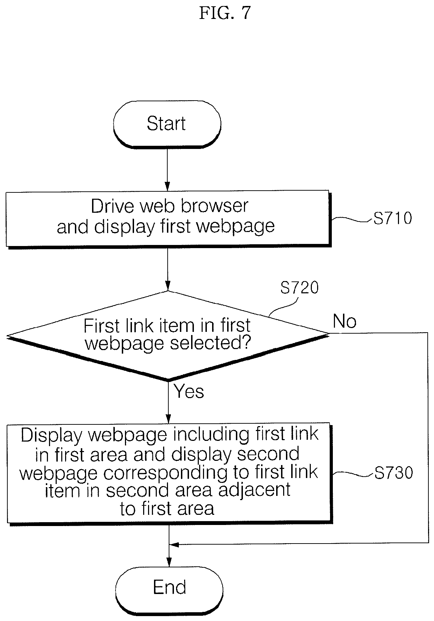

When a first link item in the first webpage 820 is selected, the image display apparatus 100 may display the first webpage 820 in a first area and display a second webpage 830 corresponding to the first link item in a second area adjacent to the first area. That is, a webpage including a link item and a webpage corresponding to a linked item can be displayed on one screen, improving user convenience. Particularly, user convenience when news related webpages are displayed can be enhanced. This will be described later in more detail with reference to FIG. 7.

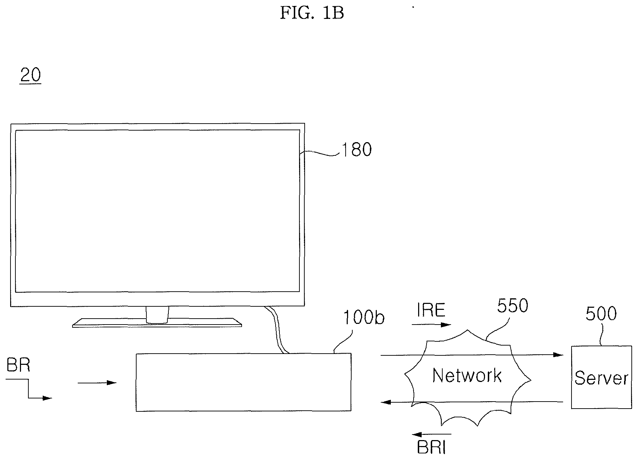

FIG. 1B illustrates another exemplary image display system related to the present invention.

Referring to the figure, the image display system 20 may include an image providing device 100b, the display 180 and the server 500.

The image providing device 100b may be a set-top box different from the TV or the monitor of FIG. 1A. In the specification, the image display apparatus is considered to include the image providing device 100b and the display 180.

The image providing device 100b may execute a web browser according to web screen display input, transmit the webpage information request IRE to the server 500 and receive the webpage screen information BRI from the server 500.

The image providing device 100b may drive the web browser according to web screen display input and display the first webpage 820 on the display 180 on the basis of the webpage screen information BRI that is data received from the server 500.

When a first link item in the first webpage 820 is selected, the image providing device 100b may display the first webpage 820 in a first area and display a second webpage 830 corresponding to the first link item in a second area adjacent to the first area. That is, a webpage including a link item and a webpage corresponding to a linked item can be displayed on one screen, improving user convenience. Particularly, user convenience when news related webpages are displayed can be enhanced. This will be described later in more detail with reference to FIG. 7.

The image display apparatus 100 of FIG. 1A will be described as an image display apparatus according to an embodiment of the present invention.

FIG. 2 is an exemplary block diagram of the image display apparatus of FIG. 1A.

Referring to FIG. 2, the image display apparatus 100 according to an embodiment of the present invention may include a broadcast receiver 105, an external device interface 130, a storage unit 140, a user input interface 150, a sensor unit (not shown), a controller 170, a display 180 and an audio output unit 185.

The broadcast receiver 105 may include a tuner 110 and a demodulator 120. The broadcast receiver 105 may further include a network interface 135 differently from the configuration shown in the figure. Alternatively, the broadcast receiver 105 may be designed such that the network interface 135 is included therein but the tuner 110 and the demodulator 120 are not included therein.

The broadcast receiver 105 may further include the external device interface 130 differently from the configuration shown in the figure. For example, a broadcast signal may be received through the external device interface 130.

The tuner 110 selects a radio frequency (RF) broadcast signal corresponding to a channel selected by a user or RF broadcast signals corresponding to all prestored channels from among RF broadcast signals received through an antenna 50. Further, the tuner 110 converts a selected RF broadcast signal into an intermediate frequency signal or a baseband video or audio signal.

For example, the tuner 110 converts the selected RF broadcast signal into a digital IF signal when the selected RF broadcast signal is a digital broadcast signal and converts the selected RF broadcast signal into an analog baseband video or audio signal CVBS/SIF when the selected RF broadcast signal is an analog broadcast signal. That is, the tuner 110 can process digital broadcast signals or analog broadcast signals. The analog baseband video or audio signal CVBS/SIF output from the tuner 110 may be directly input to the controller 170.

The tuner 110 may sequentially select RF broadcast signals of all broadcast channels stored through a channel memory function from among RF broadcast signals received through the antenna and convert the selected RF broadcast signals into IF signals or baseband video or audio signals.

The tuner 110 may include a plurality of tuners for receiving broadcast signals of a plurality of channels. Alternatively, the tuner 110 may be a single tuner that simultaneously receives broadcast signals of a plurality of channels.

The demodulator 120 receives a digital IF signal DIF converted in the tuner unit 110 and demodulates the digital IF signal.

The demodulator 120 may perform demodulation and channel decoding and then output a stream signal TS. Here, the stream signal may be a multiplexed video signal, audio signal or data signal.

The stream signal output from the demodulator 120 may be input to the controller 170. The controller 170 performs demultiplexing, video/audio signal processing and the like, outputs an image to the display 180 and outputs sound to the audio output unit 185.

The external device interface 130 may transmit or receive data to or from a connected external device 100b. To this end, the external device interface 130 may include an A/V input/output unit (not shown) or a wireless communication unit (not shown).

The external device interface 130 may be connected to external devices such as a digital versatile disc (DVD) player, a Blu-ray player, a game device, a camera, a camcorder, a computer (notebook computer) and a set-top box in a wired/wireless manner and may perform input/output operation for external devices.

The A/V input/output unit may receive video and audio signals of an external device. The wireless communication unit may perform short-range wireless communication with other electronic devices.

The network interface 135 provides an interface for connecting the image display apparatus 100 to wired/wireless networks including the Internet. For example, the network interface 135 can receive content or data provided by the Internet, a content provider or a network operator through a network.

The storage unit 140 may store programs for signal processing and control in the controller 170 and processed video, audio or data signals.

In addition, the storage unit 140 may execute a function of temporarily storing video, audio or data signals input to the external device interface 130. Furthermore, the storage unit 140 may store information about a predetermined broadcast channel through a channel memory function such as a channel map.

While FIG. 2 shows an embodiment in which the storage unit 140 is separated from the controller 170, the scope of the present invention is not limited thereto and the storage unit 140 may be included in the controller 170.

The user input interface 150 transfers a signal input by a user to the controller 170 or transfers a signal from the controller 170 to the user.

For example, the user input interface 150 may transmit/receive user input signals such as power on/off, channel selection and screen setting signals from a remote controller 200, transfer a user input signal input through a local key such as a power key, a channel key, a volume key or a setting key to the controller 170, transfer a user input signal input from a sensor unit (not shown) that senses a user's gesture to the controller 170 or transmits a signal from the controller 170 to the sensor unit (not shown).

The controller 170 may demultiplex a stream input through the tuner 110, the demodulator 120 or the external device interface 130 or process demultiplexed signals to generate and output signals for video or audio output.

A video signal processed by the controller 170 may be input to the display 180 and displayed as an image corresponding thereto. Further, a video signal processed by the controller 170 may be input to an external output device through the external device interface 130.

An audio signal processed by the controller 170 may be output as a sound to the audio output unit 185. Further, an audio signal processed by the controller 170 may be input to an external output device through the external device interface 130.

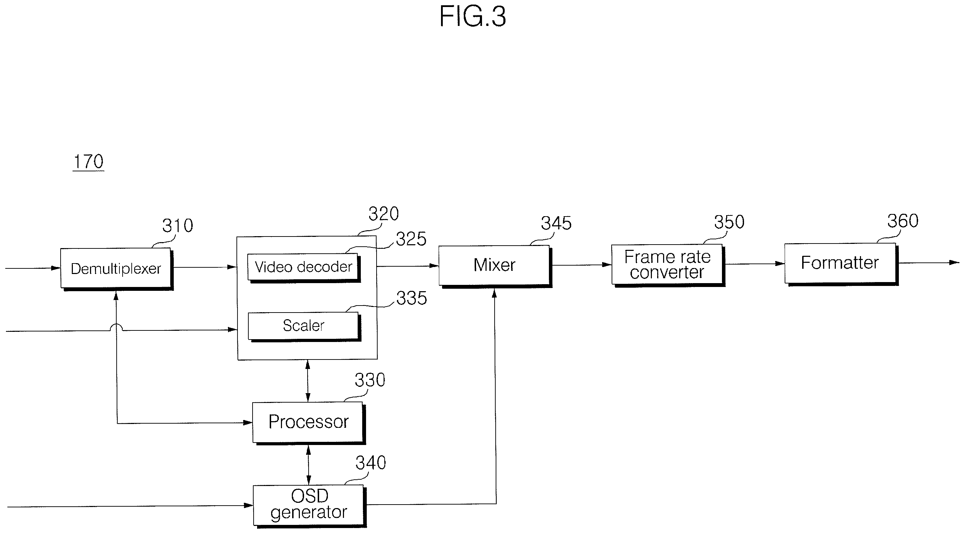

The controller 170 may include a demultiplexer and a video processor which are not shown in FIG. 2. This will be described later with reference to FIG. 3.

In addition, the controller 170 may control the overall operation of the image display apparatus 100. For example, the controller 170 can control the tuner 110 to tune in RF broadcast corresponding to a channel selected by the user or a prestored channel.

Furthermore, the controller 170 may control the image display apparatus 100 according to a user command input through the user input interface 150 or an internal program.

The controller 170 may control the display 180 to display images. Here, images displayed on the display 180 may be still images or moving images and may be 2D images or 3D images.

The controller 170 may control a predetermined 2D object to be displayed in an image displayed on the display 180. For example, the object may be at least one of an accessed web screen (a news, a magazine or the like), an electronic program guide (EPG), various menus, a widget, an icon, a still image, a moving image and text.

The controller 170 may recognize the position of the user on the basis of an image captured by an image-capturing unit (not shown). For example, the controller 170 can recognize a distance (a z-axis coordinate) between the user and the image display apparatus 100. In addition, the controller 170 can recognize x-axis and y-axis coordinates of the user position in the display 180.

The display 180 converts a video signal, a data signal, an OSD signal and a control signal processed by the controller 170 or a video signal, a data signal and a control signal received from the external device interface 130 to generate driving signals.

The display 180 may be a PDP, an LCD, an OLED, a flexible display or the like and may also be a 3D display. The 3D display 180 may be divided into an autostereoscopic display and a glasses-type display.

The display 180 may be configured as a touchscreen and used as an input device instead of an output device.

The audio output unit 185 receives an audio signal processed by the controller 170 and outputs the audio signal as a sound.

The image-capturing unit (not shown) captures an image of the user. Although the image-capturing unit (not shown) may be implemented as a single camera, the present invention is not limited thereto and the image-capturing unit (not shown) may be implemented as a plurality of cameras. The image-capturing unit (not shown) may be embedded in the image display apparatus 100 and located above the display 180 or may be arranged separately from the image display apparatus 100. Image information captured by the image-capturing unit (not shown) may be input to the controller 170.

The controller 170 may sense a gesture of the user on the basis of an image captured by the image-capturing unit (not shown) or signals sensed through the sensor unit (not shown) or a combination thereof.

A power supply unit 190 supplies power to the image display apparatus 100. Particularly, the power supply unit 190 may supply the controller 170 which can be implemented in the form of a system on chip (SOC), the display 180 for displaying images and the audio output unit 185 for audio output.

Specifically, the power supply unit 190 may include a converter for converting AC power into DC power and a DC/DC converter for changing a DC power level.

The remote controller 200 transmits user input to the user input interface 150. To this end, the remote controller 200 may use Bluetooth, radio frequency (RF) communication, infrared (IR) communication, Ultra Wideband (UWB), ZigBee and the like. Furthermore, the remote controller 200 may receive a video, audio or data signal output from the user input interface 150 and display the received signal or output the same as sound.

Meanwhile, the image display apparatus 100 may be a fixed type or movable digital broadcast receiver capable of receiving digital broadcast.

The block diagram of the image display device 100 shown in FIG. 2 is a block diagram for an embodiment of the present invention. Components of the block diagram may be integrated, added or omitted according to specifications of the actually implemented image display apparatus 100. That is, two or more components may be combined or one component may be divided into two or more components as necessary. Furthermore, a function executed in each block is for description of an embodiment of the present invention, and a detailed operation or device of each block does not limit the scope of the present invention.

The image display apparatus 100 is an example of a video signal processing apparatus which processes images stored therein or images input thereto. The image providing device 100b of FIG. 1B may be an apparatus which does not include the display 180 shown in FIG. 2. That is, the image providing device 100b of FIG. 1B may be a set-top box, a DVD player, a Blu-ray player, a game console or a computer.

FIG. 3 is a block diagram of the controller of FIG. 2.

Referring to the figure, the controller 170 according to an embodiment of the present invention may include a demultiplexer 310, a video processor 320, a processor 330, an OSD generator 340, a mixer 345, a frame rate converter 350 and a formatter 360. In addition, the controller 170 may further include an audio processor (not shown) and a data processor (not shown).

The demultiplexer 310 demultiplexes an input stream. For example, when an MPEG-2 TS is input, the demultiplexer 310 can demultiplex the MPEG-2 TS to separate the same into video, audio and data signals. Here, a stream signal input to the demultiplexer 310 may be a stream signal output from the tuner 110, the demodulator 120 or the external device interface 130.

The video processor 320 may perform video processing on the demultiplexed video signal. To this end, the video processor 320 may include a video decoder 325 and a scaler 335.

The video decoder 325 decodes the demultiplexed video signal and the scaler 335 scales the resolution of the decoded video signal such that the display 180 can output the video signal.

The video decoder 325 may include decoders of various standards. For example, the video decoder 325 may include an MPEG-2 decoder, an H.264 decoder, a 3D video decoder for color images and depth images and a decoder for multi-view images.

The processor 330 may control overall operation of the image display apparatus 100 and the controller 170. For example, the processor can control the tuner 110 to tune to an RF broadcast corresponding to a channel selected by the user or a prestored channel.

In addition, the processor 330 may control the image display apparatus 100 according to a user command input through the user input interface 150 or an internal program.

Furthermore, the processor 330 may control data transmission between the controller 170 and the network interface 135 or the external device interface 130.

Further, the processor 330 may control operations of the demultiplexer 310, the video processor 320 and the OSD generator 340 included in the controller 170.

The OSD generator 340 generates an OSD signal according to user input or autonomously. For example, the OSD generator 340 can generate signals for displaying various types of information on the screen of the display 180 as graphics or text on the basis of a user input signal. The generated OSD signal may include various types of data such as a user interface screen, various menu screens, widgets and icons. Further, the generated OSD signal may include a 2D object or a 3D object.

In addition, the OSD generator 340 may generate a pointer which can be displayed on the display on the basis of a pointing signal input from the remote controller 200. Particularly, such a pointer may be generated in a pointing signal processor and the OSD generator 340 may include such a pointing signal processor (not shown). Of course, the pointing signal processor (not shown) may be provided separately from the OSD generator 340 instead of being included in the OSD generator 340.

The mixer 345 may mix the OSD signal generated by the OSD generator 340 with the decoded video signal processed by the video processor 320. The mixed video signal is provided to the frame rate converter 350.

The frame rate converter (FRC) 350 may convert a frame rate of an input image. The frame rate converter 350 may output the input image without additionally converting the frame rate thereof.

The formatter 360 may arrange left-eye frames and right-eye frames of a frame-rate-converted 3D image. In addition, the formatter 360 may output a synchronization signal Vsync for opening a left-eye glass and a right-eye glass of a 3D viewing apparatus (not shown).

The formatter 360 may change the format of an input video signal into a video signal which can be displayed on the display and output the video signal.

Further, the formatter 360 may change the format of a 3D video signal. For example, the formatter 360 can change the format of a 3D video signal to one of various 3D formats such as a side-by-side format, a top/down format, a frame sequential format, an interlaced format and a checker box format.

The formatter 360 may convert a 2D video signal into a 3D video signal. For example, the formatter 360 may detect an edge or a selectable object from the 2D video signal and separate an object according to the detected edge or the selectable object as a 3D video signal to thereby generate the 3D video signal according to a 3D video generation algorithm. Here, the generated 3D video signal may be separated into a left-eye video signal L and a right-eye video signal R and aligned as described above.

Furthermore, a 3D processor (not shown) for 3D effect signal processing may be provided following the formatter 360. Such a 3D processor (not shown) may control brightness, tint and color of a video signal for 3D effect enhancement. For example, the 3D processor (not shown) can perform signal processing for making a close-range view clear and blurring a distant view. Functions of such a 3D processor may be integrated into the formatter 360 or the image processor 320.

The audio processor (not shown) included in the controller 170 may process a demultiplexed audio signal. To this end, the audio processor (not shown) may include various decoders.

Further, the audio processor (not shown) included in the controller 170 may control base, treble and volume.

The data processor (not shown) included in the controller 170 may process a demultiplexed data signal. For example, when the demultiplexed data signal is a coded data signal, the data processor (not shown) can decode the encoded data signal. The coded data signal may be electronic program guide (EPG) information including broadcast information such as start time and expiration time of broadcast programs broadcast through channels.

The block diagram of the controller 170 shown in FIG. 3 is a block diagram for an embodiment of the present invention. Components shown in the block diagram may be integrated, added or omitted according to specifications of the actually implemented controller 170.

Particularly, the frame rate converter 350 and the formatter 360 may be separately provided instead of being included in the controller 170 or separately provided as one module.

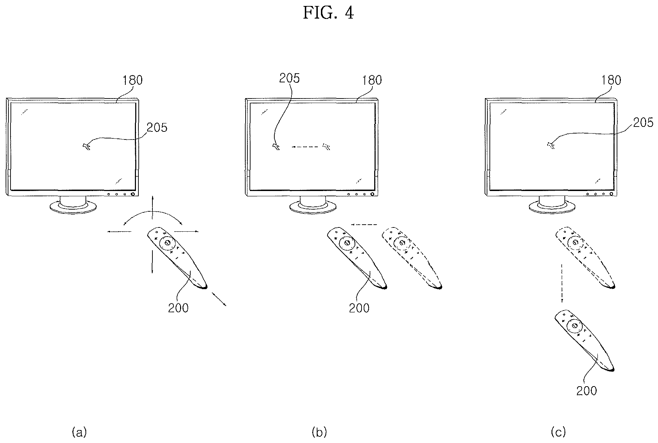

FIG. 4 illustrates a method of controlling the remote controller of FIG. 2.

FIG. 4(a) illustrates display of a pointer 205 corresponding to the remote controller 200 on the display 180.

A user may move or rotate the remote controller 200 up and down (FG 4(b)) or forward and backward (FIG. (c)). The pointer 205 displayed on the display 180 of the image display device corresponds to movement of the remote controller 200. The remote controller 200 may be called a spatial remote controller or a 3D pointing device because the pointer 205 corresponding thereto is moved and displayed according to movement in 3D space.

FIG. 4(b) illustrates a case in which the pointer 205 displayed on the display 180 of the image display device moves to the left as the remote controller 200 moves to the left.

Information on movement of the remote controller 200 sensed through a sensor of the remote controller 200 is transmitted to the image display device. The image display device may calculate coordinates of the pointer 205 from the information on movement of the remote controller 200. The image display device may display the pointer 205 corresponding to the calculated coordinates.

FIG. 4(c) illustrates a case in which the user moves the remote controller 200 away from the display 180 while pressing a specific button included in the remote controller 200. In this case, a selected area on the display 180 corresponding to the pointer 205 can be zoomed in and thus magnified. On the contrary, when the user moves the remote controller 200 toward the display 180, a selected area on the display 180 corresponding to the pointer 205 can be zoomed out and thus reduced. Conversely, the selected area may be zoomed out when the remote controller 200 is moved away from the display 180 and may be zoomed in when the remote controller 200 approaches the display 180.

Up/down movement and movement to the left and right may not be recognized while a specific button included in the remote controller 200 is pressed. That is, when the remote controller 200 moves away from or approaches the display 180, up/down movement and movement to the left and right may not be recognized and only forward/backward movement may be recognized. In a state in which the specific button included in the remote controller 200 is not pressed, only the pointer 205 is moved according to up/down movement and movement to the left and right of the remote controller 200.

A moving speed or moving direction of the pointer 205 may correspond to a moving speed or moving direction of the remote controller 200.

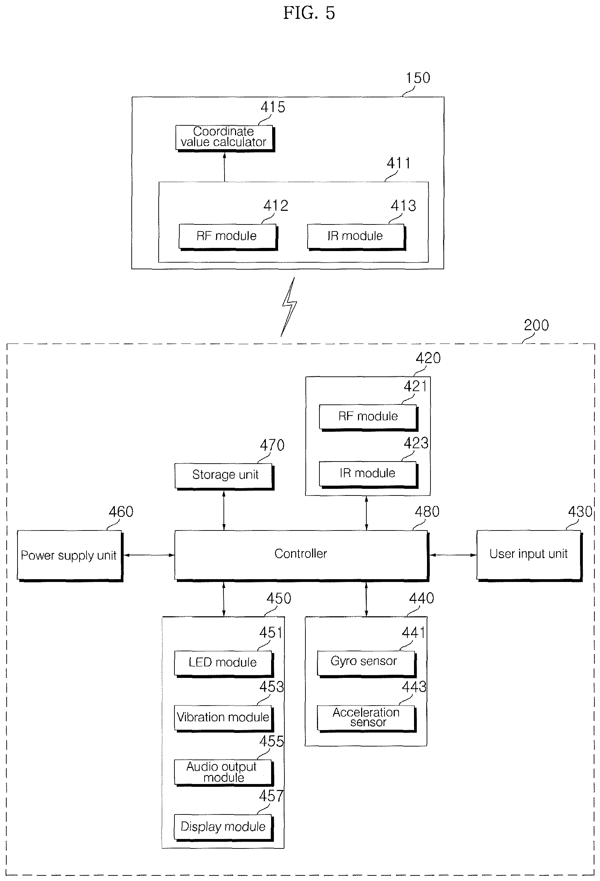

FIG. 5 is a block diagram of the remote controller of FIG. 2.

Referring to the figure, the remote controller 200 may include a wireless communication unit 420, a user input unit 430, a sensor unit 440, an output unit 450, a power supply unit 460, a storage unit 470 and a controller 480.

The wireless communication unit 420 transmits/receives signals to/from one of the image display devices according to the aforementioned embodiments of the present invention. The image display device 100 from among the image display devices according to the embodiments of the present invention will be described as an example.

In the present embodiment, the remote controller 200 may include an RF module 421 which can transmit/receive signals to/from the image display device 100 according to RF communication standards. In addition, the remote controller 200 may include an IR module 423 which can transmit/receive signals to/from the image display device 100 according to IR communication standards.

In the present embodiment, the remote controller 200 transmits a signal containing information on movement of the remote controller 200 to the image display device 100 through the RF module 421.

In addition, the remote controller 200 may receive a signal transmitted from the image display device 100 through the RF module 421. Further, the remote controller 200 may transmit commands for power on/off, channel change, volume change and the like to the image display device 100 through the IR module 423 as necessary.

The user input unit 430 may be configured as a keypad, a button, a touchpad or a touchscreen. A user may input a command related to the image display device 100 to the remote controller 200 by manipulating the user input unit 430. When the user input unit 430 includes a hard key button, the user can input a command related to the image display device 100 to the remote controller 200 by pushing the hard key button. When the user input unit 430 includes a touchscreen, the user can input a command related to the image display device 100 to the remote controller 200 by touching a soft key of the touchscreen. Furthermore, the user input unit 430 may include various types of input means which can be operated by the user, such as a scroll key and a jog key, and the present embodiment does not limit the scope of the present invention.

The sensor unit 440 may include a gyro sensor 441 or an acceleration sensor 443. The gyro sensor 441 may sense information on movement of the remote controller 200.

For example, the gyro sensor 441 can sense information on operation of the remote controller 200 on the basis of x, y and z axes. The acceleration sensor 443 may sense information on a moving speed of the remote controller 200. The sensor unit 440 may further include a distance measurement sensor and sense a distance to the display 180 using the distance measurement sensor.

The output unit 450 may output a video or audio signal corresponding to manipulation of the user input unit 430 or a signal transmitted from the image display device 100. The user can recognize whether the user input unit 430 is manipulated or whether the image display device 200 is controlled through the output unit 450.

For example, the output unit 450 may include an LED module 451 which is turned on, a vibration module 435 which generates vibration, a sound output module 455 which outputs a sound or a display module 457 which outputs an image, when the user input unit 430 is manipulated or a signal is transmitted/received to/from the image display device 100 through the wireless communication unit 420.

The power supply unit 460 provides power to the remote controller 200. The power supply unit 460 can reduce power consumption by stopping power supply when the remote controller 200 is not moved for a predetermined time. The power supply unit 460 can resume power supply when a predetermined key included in the remote controller 200 is manipulated.

The storage unit 470 may store various types of programs, application data and the like necessary for control or operation of the remote controller 200. If the remote controller 200 wirelessly transmits/receives signals to/from the image display device 100 through the RF module 421, the remote controller 200 and the image display device 100 transmit/receive signals through a predetermined frequency band. The controller 480 of the remote controller 200 may store, in the storage unit 470, information about the frequency band through which the remote controller 200 and the image display device 200 paired therewith can wirelessly transmit/receive signals, and refer to the information.

The controller 480 controls details with respect to control of the remote controller 200. The controller 480 may transmit, to the image display device 100 through the wireless communication unit 420, a signal corresponding to manipulation of a predetermined key of the user input unit 430 or a signal corresponding to a movement of the remote controller 200 sensed by the sensor unit 440.

The user input interface 150 of the image display device 100 may include a wireless communication unit 411 which can wirelessly transmit/receive signals to/from the remote controller 200 and a coordinate value calculator 415 which can calculate a coordinate value of a pointer corresponding to operation of the remote controller 200.

The user input interface 150 may wirelessly transmit/receive signals to/from the remote controller 200 through an RF module 412. In addition, the user input interface 150 may receive, through an IR module 413, signals transmitted by the remote controller 200 according to IR communication standards.

The coordinate value calculator 415 may correct an error or an error due to hand shaking in a signal corresponding to operation of the remote controller 200, received through the wireless communication unit 151, and calculate a coordinate value (x, y) of the pointer 205 to be displayed on the display 180.

A signal transmitted from the remote controller 200 and input to the image display device 100 through the user input interface 150 is transmitted to the controller 170 of the image display device 100. The controller 170 may identify information regarding operation and key manipulation of the remote controller from the signal transmitted from the remote controller 200 and control the image display device 100 in response to the information.

Alternatively, the remote controller 200 may calculate a coordinate value of the pointer corresponding to operation thereof and output the coordinate value to the user input interface 150 of the image display device 100. In this case, the user input interface 150 of the image display device 100 can transmit information about the received pointer coordinate value to the controller 170 without an additional process for correcting an error or an error due to hand shaking.

Alternatively, the coordinate value calculator 415 may be included in the controller 170 instead of the user input interface 150, differently from the configuration shown in the figure.

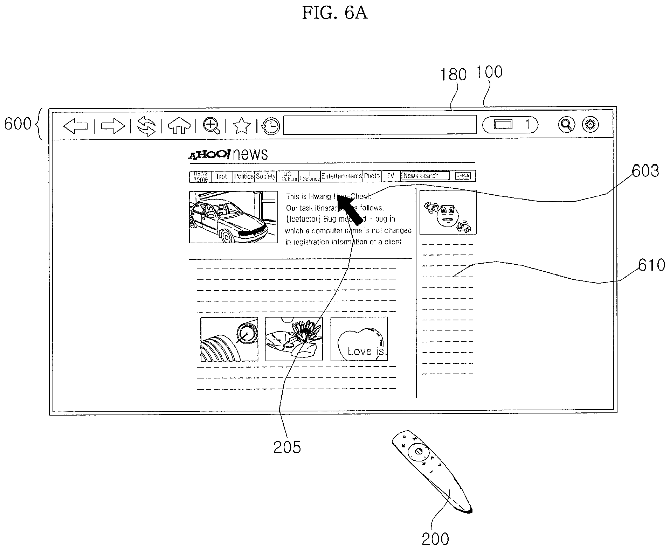

FIGS. 6A to 6C illustrate display of webpages on an image display device.

FIG. 6A illustrates display of a webpage 610 on the image display device 100.

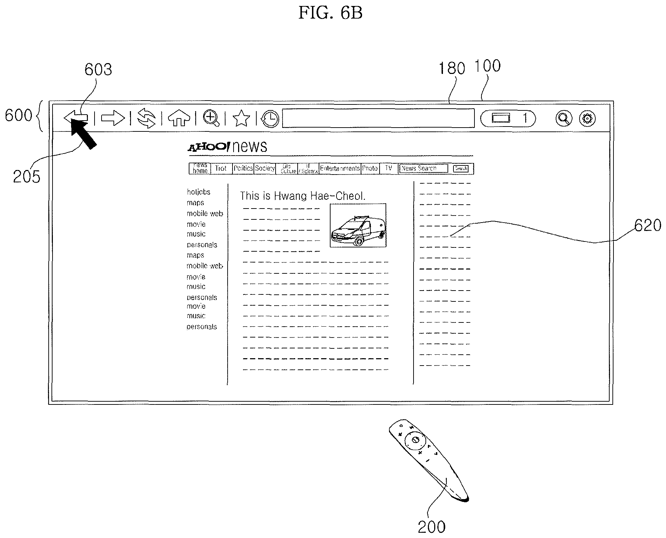

When a link item 603 in the webpage 610 is selected using the pointer 205 of the remote controller 200, a new webpage 620 corresponding to the link item 603 is displayed at the position of the webpage 610, as shown in FIG. 6B.

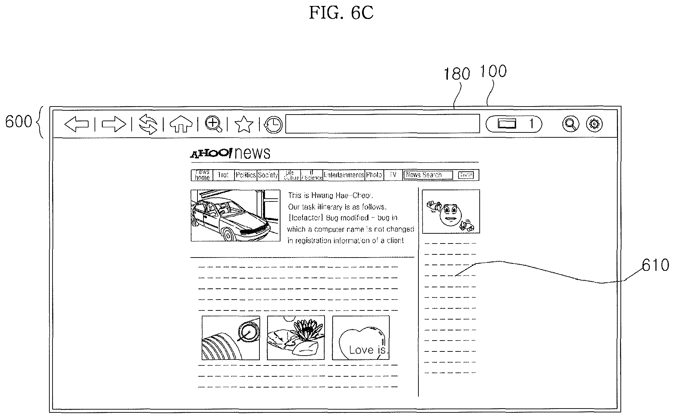

To view the previous webpage 610 again, a rewind item 603 of a web browser 600 needs to be selected. When the rewind item 603 is selected, the previous webpage 610 is displayed again at the position of the displayed webpage 620, as shown in FIG. 6C.

When a webpage is displayed on the display 180 of the image display device 100, as illustrated in FIG. 6A to 6C, to view a previous webpage after selection of a link item, the rewind item needs to be selected, which is inconvenient.

Meanwhile, display of a single webpage as a full screen on the display 180, as shown in FIGS. 6A to 6C, is a waste of screen while the image display device 10 such as a TV receiver tends to increase in size.

Therefore, the present invention enables display of a plurality of webpages on a single screen of the display 180. Particularly, when a first link item in a first webpage is selected, the present invention controls a second webpage corresponding to the first link item to be displayed in a second area adjacent to a first area. This will be described below with reference to FIG. 7.

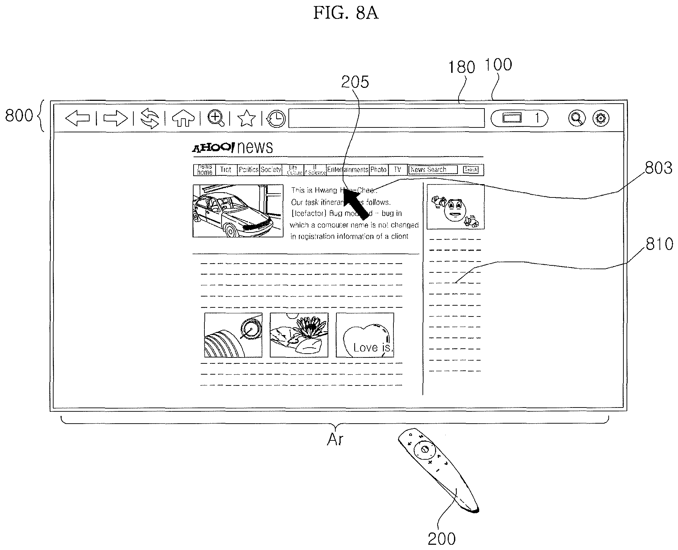

FIG. 7 is a flowchart illustrating an exemplary operating method of an image display device according to an embodiment of the present invention and FIGS. 8A to 16E are diagrams for describing the operating method of FIG. 7.

Referring to FIG. 7, the controller 170 of the image display device 100 drives a web browser according to a web screen display input and controls a first webpage 820 to be displayed on the display 180 on the basis of webpage screen information BRI which is data received from the server 500 (S710).

Then, the controller 170 of the image display device 100 determines whether a first link item in the first webpage 820 is selected (S720). When the first link item is selected, the controller 170 controls the first webpage 820 to be displayed in a first area and controls a second webpage 830 corresponding to the first link item to be displayed in a second area adjacent to the first area (S730).

The controller 170 may move the first webpage when the first and second webpages 820 and 830 are displayed together. The controller 170 may control the moved first wegpage 820 to be arranged on the left and controls the second webpage 830 to be arranged on the right.

When a second link item in the first webpage 820 is selected, the controller 170 may control a third webpage corresponding to the second link item to be displayed at the display position of the second webpage 830.

When the rewind item is selected, the controller 170 may control the first webpage 820 from among the first and second webpages 820 and 830 displayed on the display 180 to be moved to the right such that only the first webpage is displayed.

In addition, the controller 170 may control the pointer 205 to be displayed on the display 180 on the basis of a pointing signal from the remote controller 200 and, when the pointer 205 is located in one of the first and second webpages 820 and 830, control the webpage in which the pointer 205 is located to be enlarged.

Further, the controller 170 may control the pointer 205 to be displayed on the display 180 on the basis of the pointing signal from the remote controller 200 and, when the pointer 205 is moved from the first webpage 820 to the second webpage 830, control the second webpage 830 to be enlarged.

The controller 170 may control the pointer 205 to be displayed on the display 180 on the basis of the pointing signal from the remote controller 200 and, when the pointer 205 remains on the second webpage 830 for two hours or longer, control the luminance of the first webpage 820 to decrease.

When the pointer 205 is moved from the first webpage 820 to the second webpage 830 and then moved to the first webpage 820, the controller 170 may control the enlarged second webpage 830 to decrease in size such that the first and second webpages 820 and 830 have the same size or the first webpage 820 is larger than the second webpage 830.

The controller 170 may control the pointer 205 to be displayed on the display 180 on the basis of the pointing signal from the remote controller 200 and, when the pointer 205 remains on the first webpage 820 for one hour or longer, control the first webpage 820 from among the first and second webpages 820 and 830 displayed on the display 180 to be moved to the right such that only the first webpage is displayed.

When a link item on the second webpage 830 is selected, the controller 170 may control a third webpage corresponding to the link item on the second webpage 830 to be additionally displayed along with the first and second webpages 820 and 830.

When the link item in the second webpage 830 is selected, the controller 170 may control the first and second webpages to be displayed at the position of the first webpage 820 when only the first and second webpages 820 and 830 are displayed and control the third webpage to be displayed at the position of the second webpage 830 when only the first and second webpages 820 and 830 are displayed.

When the first and second webpages 820 and 830 are displayed, the controller 170 may control the first webpage 820 to be displayed at the left side as a mini map and control the second webpage 830 to be displayed at the right side.

When a second link item in the first webpage 820 displayed as a mini map is selected, the controller 170 may control a third webpage corresponding to a link item in the second webpage 830 to be additionally displayed along with the first and second webpages 820 and 830.

Further, the controller 170 may control a previous webpage movement item and a next webpage movement item to be displayed and, when the next web page movement item is selected in a state in which the first and second webpages 820 and 830 are displayed, control third and fourth webpages to be displayed at display positions of the first and second webpages 820 and 830.

When the second link item in the first webpage 820 is selected in a state in which the first and second webpages 820 and 830 are displayed, the controller 170 may control the third webpage corresponding to the second link item in the first webpage 820 to be additionally displayed side by side with the first and second webpages 820 and 830.

When a third link item in the first webpage 820 is selected in a state in which the first, second and third webpages are displayed, the controller 170 may control the fourth webpage corresponding to the third link item in the first webpage 820 to be additionally displayed in one of four divided up, down, left and right areas in addition to the first, second and third webpages.

The aforementioned various operations of the controller 170 of the image display device 100 will be described below with reference to FIGS. 8A to 16E.

FIG. 8A illustrates a case in which the web browser 800 of the image display device 100 is driven to display the first webpage 810 including a plurality of link items on the display 180 according to user input.

In the figure, the first webpage 810 is displayed as a full screen in the entire area Ar of the display 180.

When the web browser is driven to display a webpage, the webpage may be displayed as a full screen, as shown in the figure.

The controller 170 of the image display device 100 may receive a pointing signal from the remote controller 200 and control the pointer 205 to be displayed on the display 180 on the basis of the pointing signal.

The pointing signal of the remote controller 200 may correspond to an x, y and z-axis movement signal based on a motion sensor included in the remote controller 200.

Alternatively, the pointing signal of the remote controller 200 may correspond to an x and y-axis movement signal indicating a movement of touch input on a touchpad included in the remote controller 200.

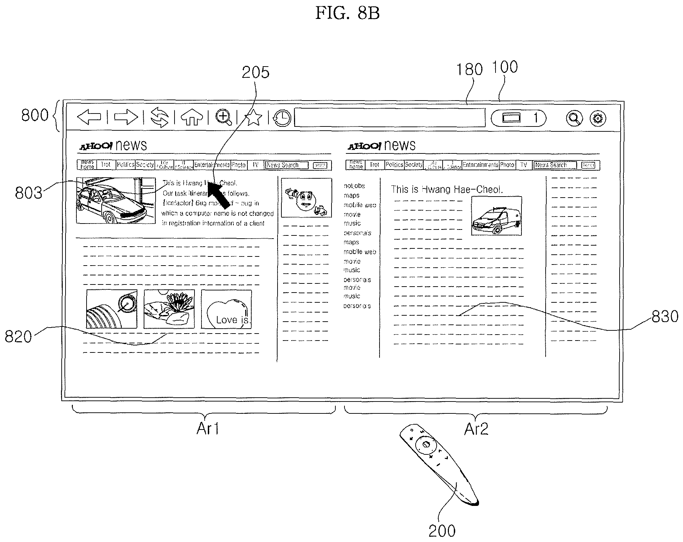

When the first link item 803 is selected through the pointer 205 in a state in which the first webpage 810 including a plurality of items is displayed, as shown in FIG. 8A, the first webpage 820 may be displayed in a first area Ar1 and the second webpage 830 corresponding to the first link item 803 may be displayed in a second area Ar2 adjacent to the first area Ar1, as shown in FIG. 8B.

That is, the displayed first webpage 810 may be reduced in size or moved and displayed in the left area Ar1, and the second webpage 830 corresponding to the first link item 803 may be displayed in the right area Ar2 as a new webpage.

The first webpage 820 and the second webpage 830 may be displayed in the area of the display 180 without overlapping with each other. For example, the area of the display 180 can be equally divided into two and the first and second webpages 820 and 830 can be respectively displayed in the two areas. Accordingly, the user can view the second webpage 830 corresponding to the first link item 803 while the first webpage 810 having many like items is displayed. Therefore, user convenience can be enhanced.

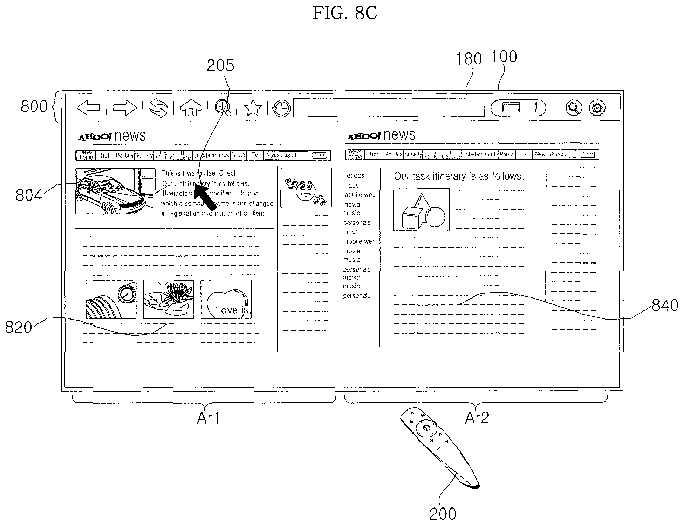

FIG. 8C illustrates a case in which the second link item 804 in the first webpage 820 is selected through the pointer 205 in a state in which the first and second webpages 820 and 830 are displayed together.

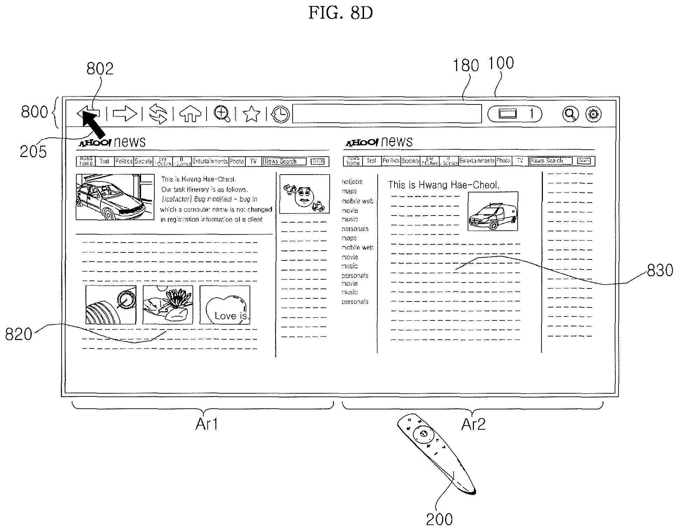

In this case, the second webpage 830 disappears and the third webpage 40 corresponding to the second link item 804 may be displayed in the display position Ar2 of the second webpage 830, as shown in FIG. 8D. Accordingly, the user can easily view the third webpage 840 corresponding to the second link item 804 while the first webpage 810 including many link items is displayed. Therefore, user convenience can be enhanced.

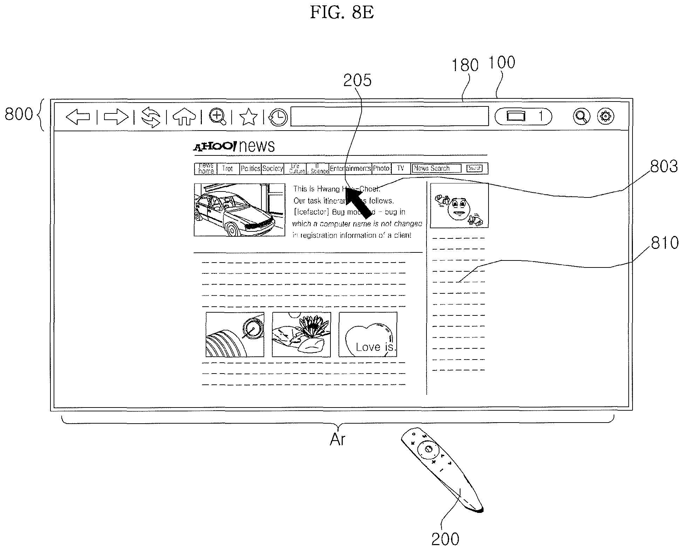

When the rewind item 802 of the web browser 800 is selected in a state in which the first and third webpages 820 and 840 are displayed together in FIG. 8D, the first webpage 810 including a plurality of link items may be displayed in the entire area Ar of the display 180 as a full screen, as shown in FIG. 8E.

That is, the first webpage 820 of FIG. 8D can be enlarged or moved to the right and displayed in the entire area Ar of the display 180 as shown in FIG. 8E.

When the pointer 205 is dragged or flicked to the left, the same operation as that performed when the rewind item 802 of the web browser 800 is selected can be performed. In this case, the display state can be returned to the previous state. Specifically, the first webpage 810 including a plurality of link items can be displayed as a full screen in the entire area Ar of the display 180, as shown in FIG. 8E.

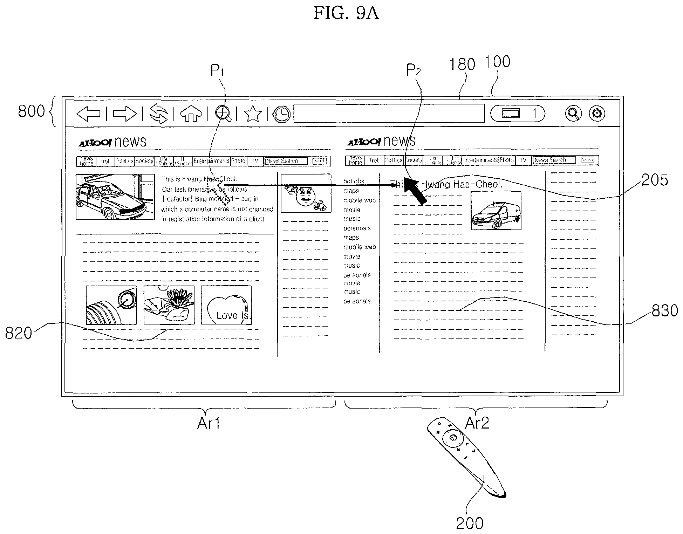

FIG. 9A illustrates movement of the pointer 205 in a state in which the first and second webpages 820 and 830 are displayed together.

The figure illustrates a case in which the pointer 205 is located at a first point P1 in the first webpage 820 and then moved to a second point P2 in the second webpage 830.

When the pointer 205 is located in one of the first webpage and the second webpage 830, the controller 170 may control the webpage in which the pointer 205 is located to increase in size.

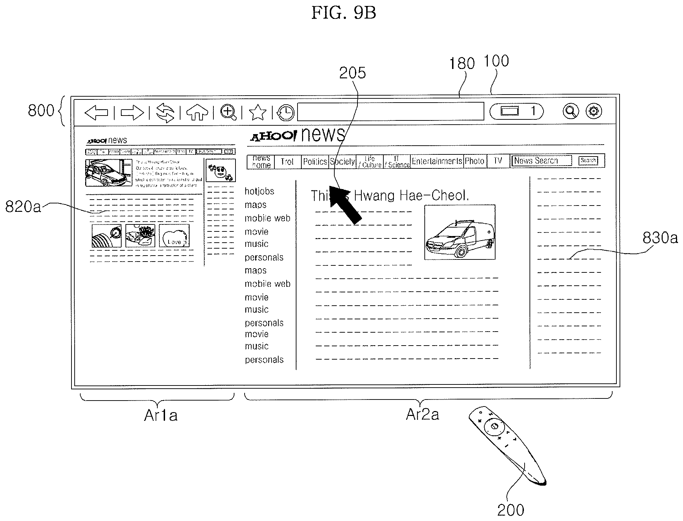

That is, the second webpage increases in size and thus the enlarged second webpage 830a can be displayed, as shown in FIG. 9B. Accordingly, readability of the second webpage 830a in which the user is interested is enhanced.

In this case, the first webpage may be displayed without being changed or reduced in size. The figure illustrates a case in which the reduced first webpage 820a is displayed in a reduced first area Ar1A and the enlarged second webpage 830a is displayed in an enlarged second area Ar2a.

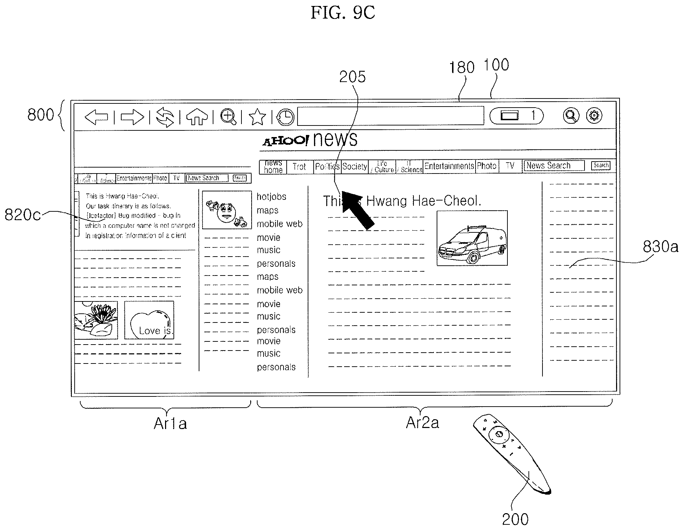

FIG. 9C illustrates a case in which the pointer 205 remains on the enlarged second webpage 830a for a predetermined time or longer. In this case, the reduced first webpage 820a is continuously displayed for the predetermined time or longer and thus pixels of the display 180 may suffer screen burn-in. To prevent this, the controller 170 may control the luminance of the reduced first webpage 820a to gradually decrease.

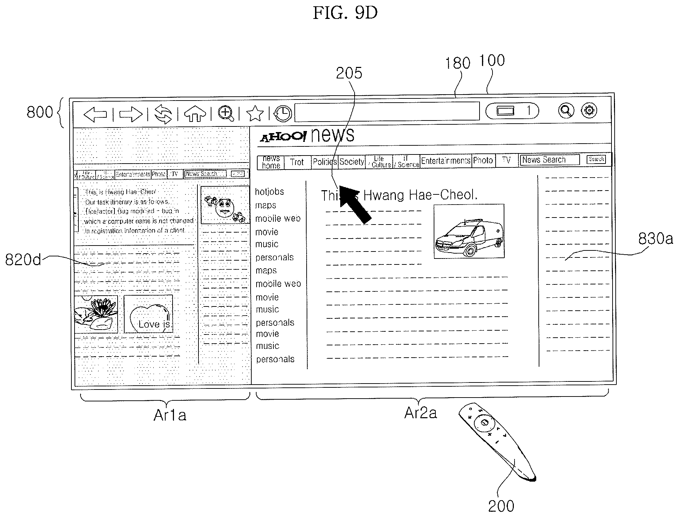

That is, the controller 170 may control the luminance of the reduced first webpage 820a to decrease to be lower than the luminance of the enlarged second webpage 830a, as shown in FIG. 9D. Accordingly, readability of the enlarged second webpage 830a can be further improved.

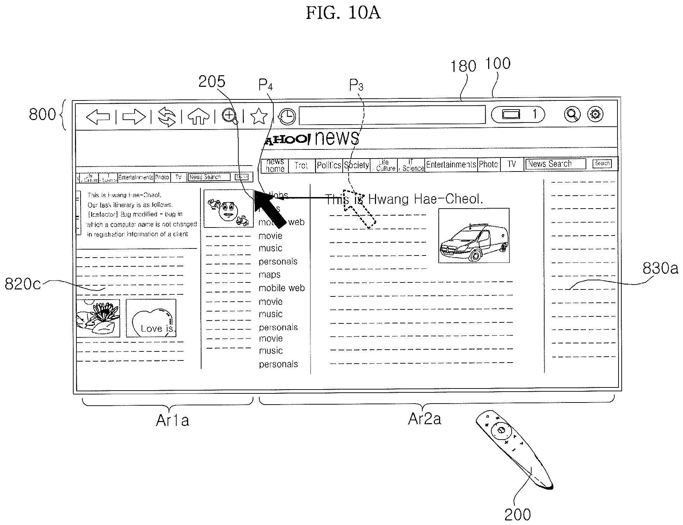

FIG. 10A illustrates movement of the pointer 205 in a state in which the first and second webpages 820 and 830 are displayed together.

The figure illustrates a case in which the pointer 205 is located at a third point P3 in the second webpage 830 and then moved to a fourth point P4 at the left of the third point P3.

When the pointer 205 is moved from the first webpage to the second webpage and then moved to the first webpage, the controller 170 may control the enlarged second webpage to decrease in size such that the first and second webpages have the same size or the first webpage is larger than the second webpage.

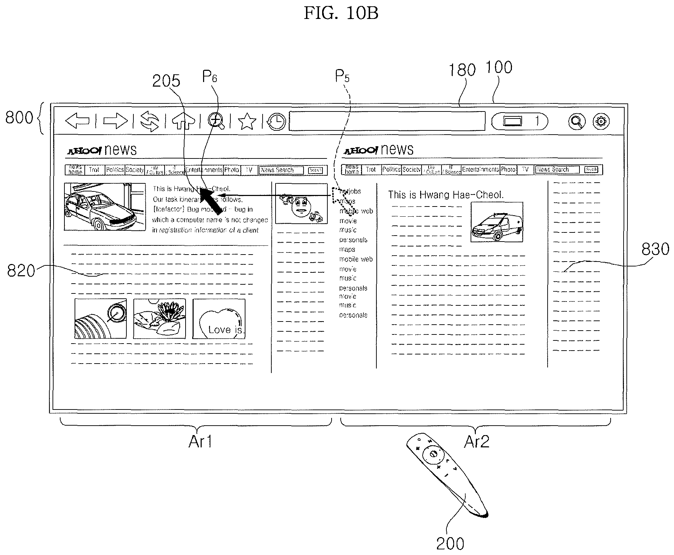

FIG. 10B illustrates movement of the pointer 205 in a state in which the first and second webpages 820 and 830 are displayed together.

The figure illustrates a case in which the pointer 205 is located at the fourth point P4 in the second webpage 830 and then moved to a fifth point P5 in the first webpage 820.

When the pointer 205 is located in one of the first webpage and the second webpage 830, the controller 170 may control the webpage in which the pointer 205 is located to increase in size.

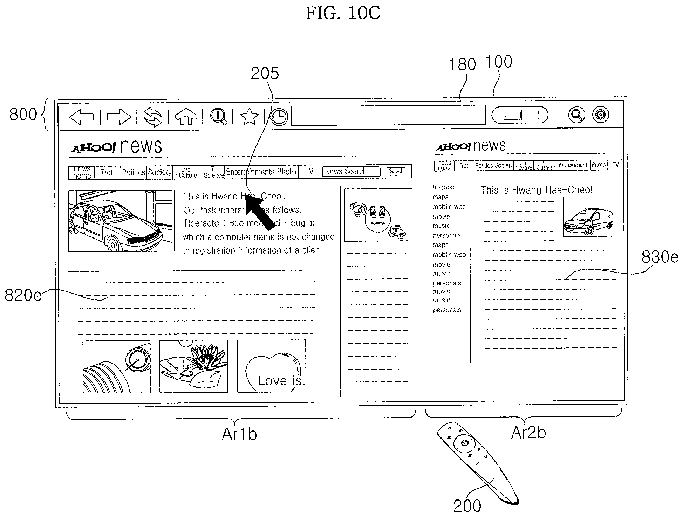

That is, the first webpage increases in size and thus the enlarged first webpage 820e can be displayed, as shown in FIG. 10C. Accordingly, readability of the second webpage 820e in which the user is interested is enhanced.

In this case, the second webpage may be displayed without being changed or reduced in size. The figure illustrates a case in which the reduced second webpage 830e is displayed in a reduced second area Ar2b and the enlarged first webpage 820e is displayed in an enlarged first area Ar1B.

When the pointer 205 remains on the enlarged first webpage 820e for a predetermined time or longer, display screen may return to the previous screen.

The controller 170 may control the pointer 205 to be displayed on the display 180 on the basis of the pointing signal from the remote controller 200 and, when the pointer 205 remains on the first webpage for a first time or longer, control the first webpage from among the first and second webpages displayed on the display 180 to be moved to the right such that only the first webpage is displayed.

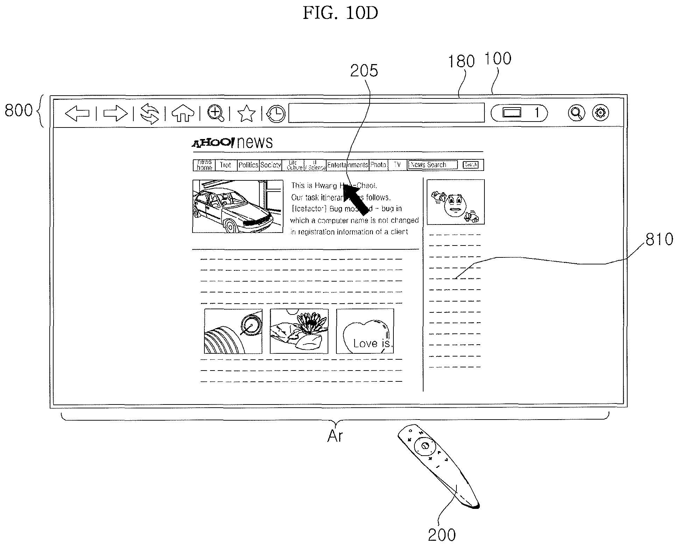

That is, the first webpage 810 including a plurality of link items can be displayed as a full screen in the entire area Ar of the display 180, as shown in FIG. 10d.

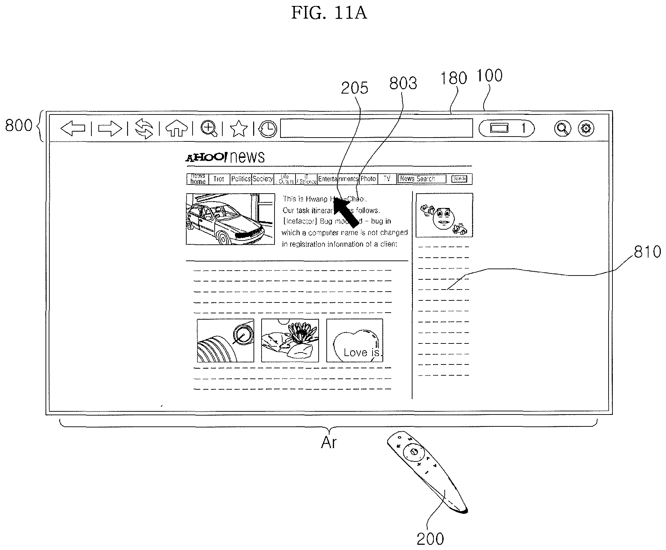

FIG. 11A illustrates selection of the first link item 803 on the first webpage 810.

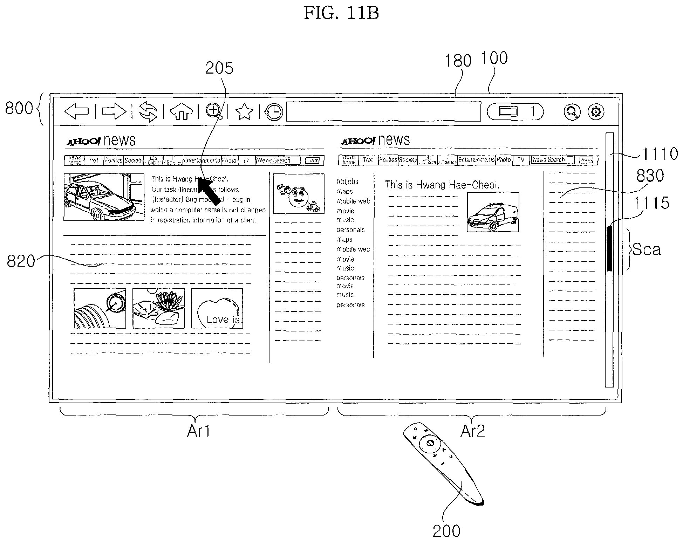

In this case, the first webpage 820 can be displayed in the first area Ar1 and the second webpage 830 corresponding to the first link item 803 can be displayed in the second area Ar2 adjacent to the first area Ar1, as shown in FIG. 11B.

The second webpage 830 may include a scroll bar 1110 for webpage scroll and an indicator 1115 indicating the current position Sca.

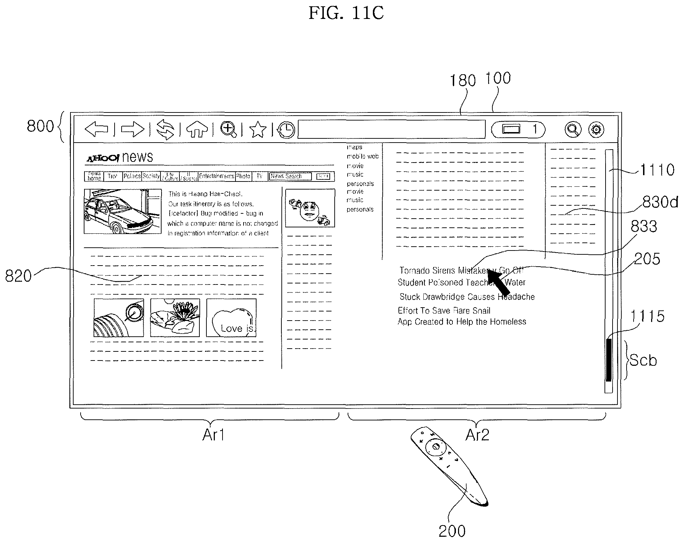

When the second webpage 830 is scrolled down, the second webpage 830d can be displayed in the second area Ar2, as shown in FIG. 11C. Here, the second webpage 830d, which has been scrolled down, may include the scroll bar 1110 and the indicator 1115 indicating the current position.

When a link item 833 in the second webpage 830d scrolled down is selected through the pointer 205, the controller 170 may control a third webpage to be additionally displayed.

When the link item included in the second webpage is selected, the controller 170 may control the third webpage corresponding to the link item in the second webpage to be additionally displayed along with the first and second webpages.

When the link item included in the second webpage is selected, the controller 170 may control the first and second webpages to be displayed at the position of the first webpage when only the first and second webpages are displayed and control the third webpage to be displayed at the position of the second webpage when only the first and second webpages are displayed.

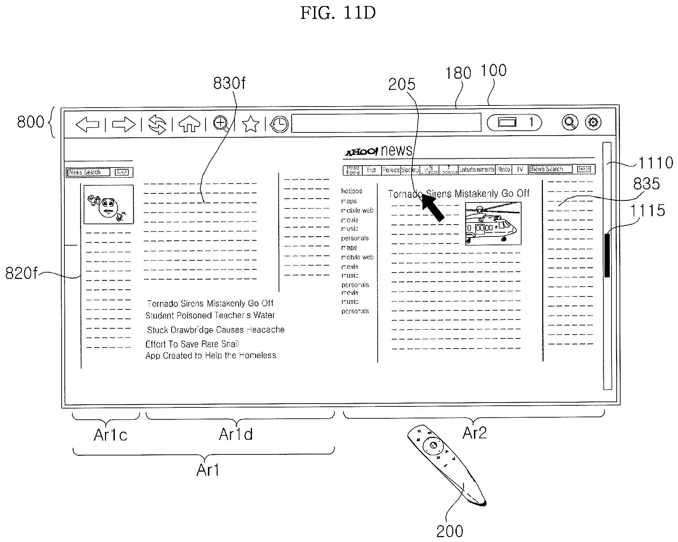

FIG. 11D illustrates additional display of the third webpage 835 corresponding to the link item 833 in the second webpage 830d.

The figure illustrates a case in which the third webpage 835 is displayed at the position of the second webpage when only the first and second webpages are displayed and the first and second webpages 820f and 830f are displayed at the position of the first webpage 820 when only the first and second webpages are displayed.

That is, the first webpage 820f is displayed in an area Arlc, the second webpage 830f is displayed in an area Arid and the third webpage 835 is displayed in the area Ar2.

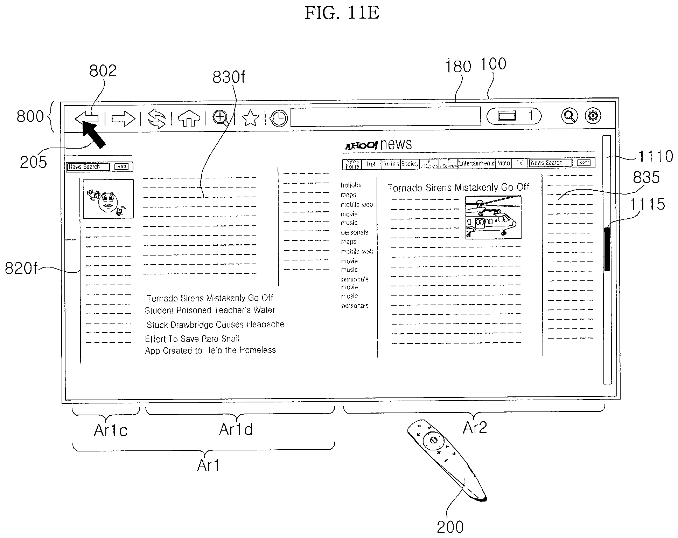

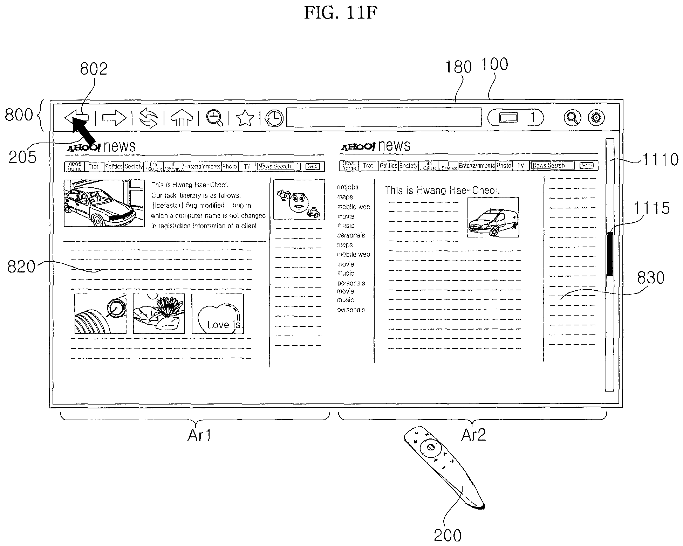

When the rewind item 802 of the browser 800 is selected through the pointer 205, as shown in FIG. 11E, the first and second webpages 820 and 830 are displayed as a previous screen, as shown in FIG. 11F.

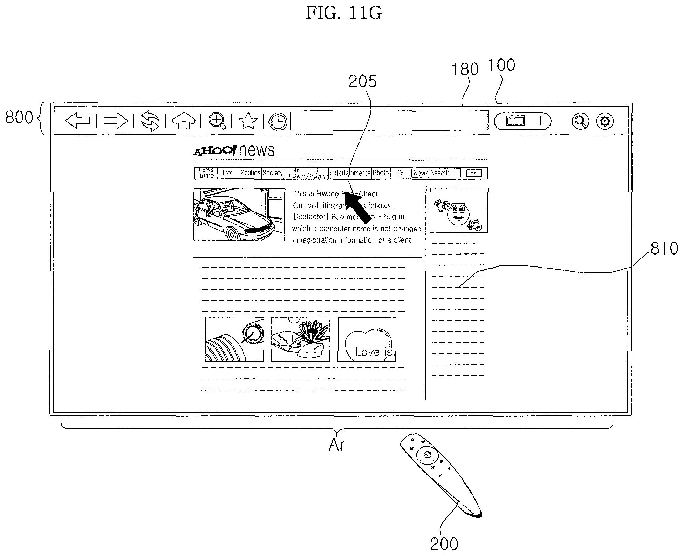

When the rewind item 802 of the browser 800 is selected again through the pointer 205, the first webpage 810 including a plurality of link items can be displayed as a full screen in the entire area Ar of the display 180, as shown in FIG. 11G.

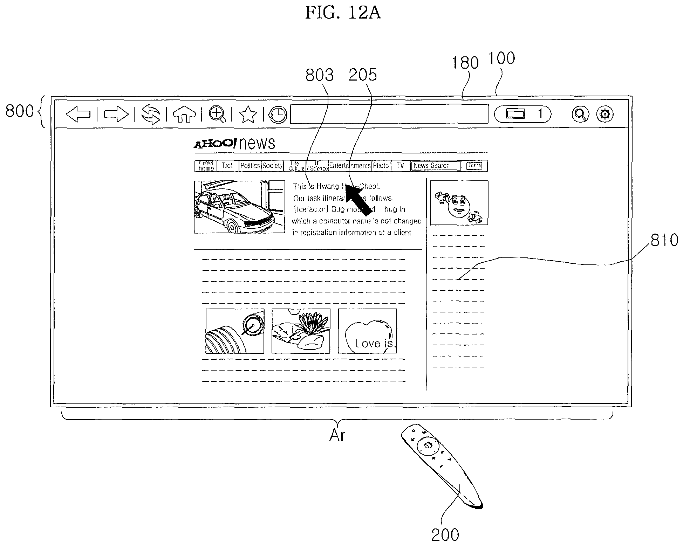

FIG. 12A illustrates selection of the first link item 803 in the first webpage 810.

When the first and second webpages are displayed together, the controller 170 may control the first webpage to be displayed as a mini map at the left side and control the second webpage to be displayed at the right side.

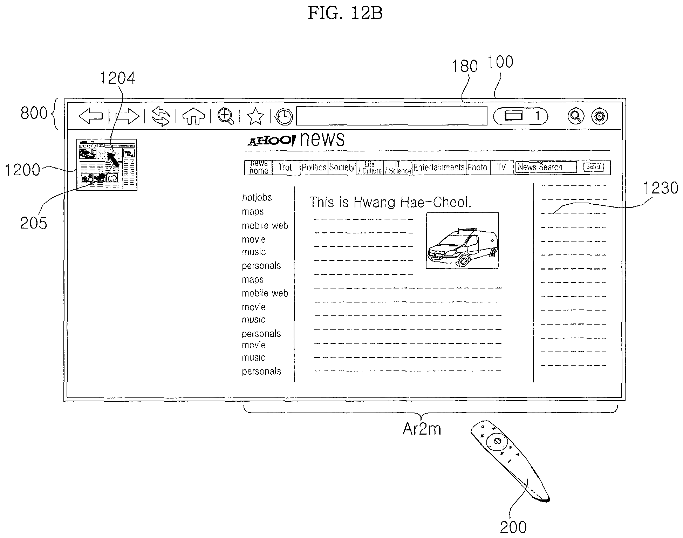

Accordingly, the first webpage 820 can be displayed as a mini map 1200 at the top of the left side of the display and the second webpage 1230 corresponding to the first link item 803 can be displayed in an area Ar2m adjacent to the mini map 1200, as shown in FIG. 12B.

When a second link item in the first webpage displayed as a mini map is selected, the controller 170 may control a third webpage corresponding to a link item in the second webpage to be additionally displayed along with the first and second webpages.

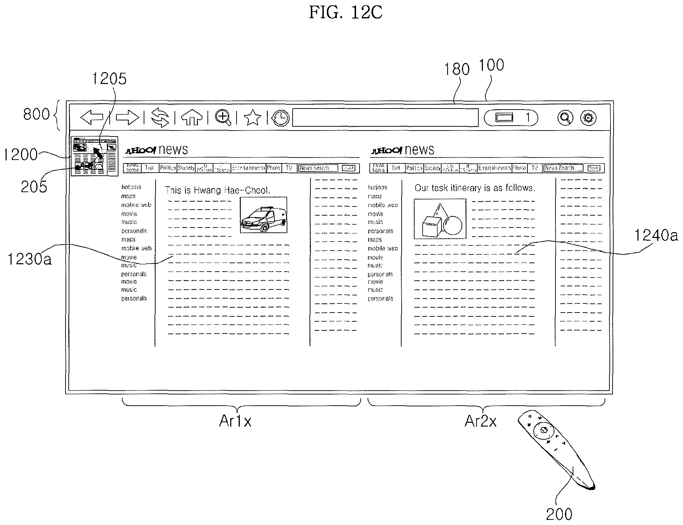

In this state, when the second link item in the mini map 1200 is selected using the pointer 205, the second webpage 1230 may be reduced and moved to the left and the third webpage 1240a corresponding to the second link item may be displayed at the right side of the second webpage, as shown in FIG. 12C.

That is, the second webpage 1230a can be displayed in an area Ar1x and the third webpage 1240a can be displayed in an area Ar2x in the state in which the mini map 1200 is displayed.

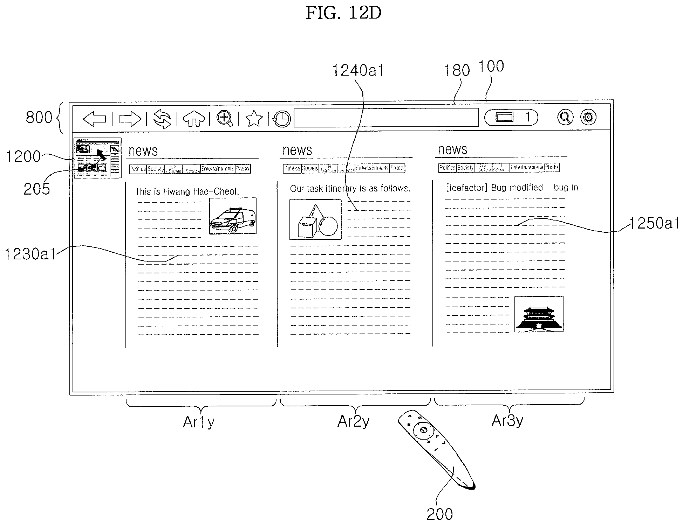

In this state, when a third link item in the mini map 1200 is selected using the pointer 205, the second and third webpages 1230 and 1240a may be reduced and moved to the left and a fourth webpage 1250a1 corresponding to the third link item may be displayed at the right side of the third webpage, as shown in FIG. 12D.

That is, the second webpage 1230a1 can be displayed in an area Ar1y, the third webpage 1240a1 can be displayed in an area Ar2y and the third webpage 1250a1 can be displayed in an area Ar3y in the state in which the mini map 1200 is displayed.

The controller 170 may control an item for shifting to the previous webpage and an item for shifting to the next webpage to be displayed on a webpage.

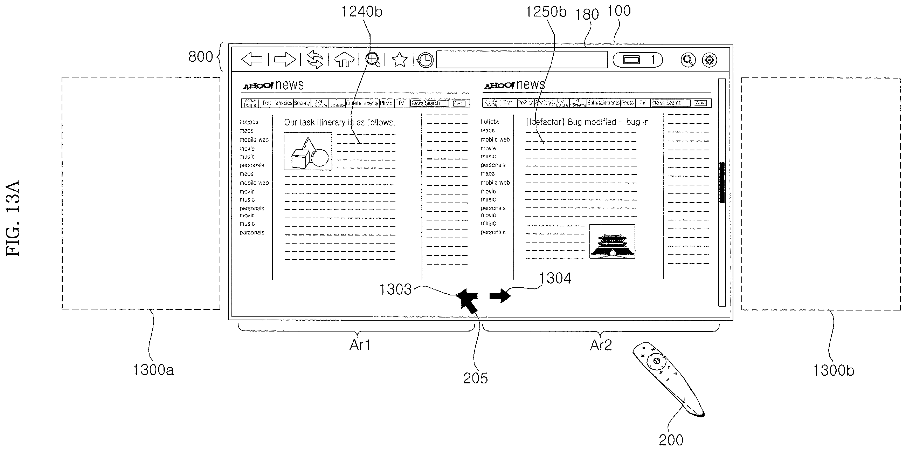

FIG. 13A illustrates a case in which the controller 170 controls the item 1303 for shifting to the previous webpage and the item 1304 for shifting to the next webpage to be displayed in a state in which third and fourth webpages 1240b and 1250b are displayed.

When the item 1303 for shifting to the previous webpage is selected through the pointer 205, the webpage, which has been displayed before the third and fourth webpages 1240b and 1250b, can be displayed.

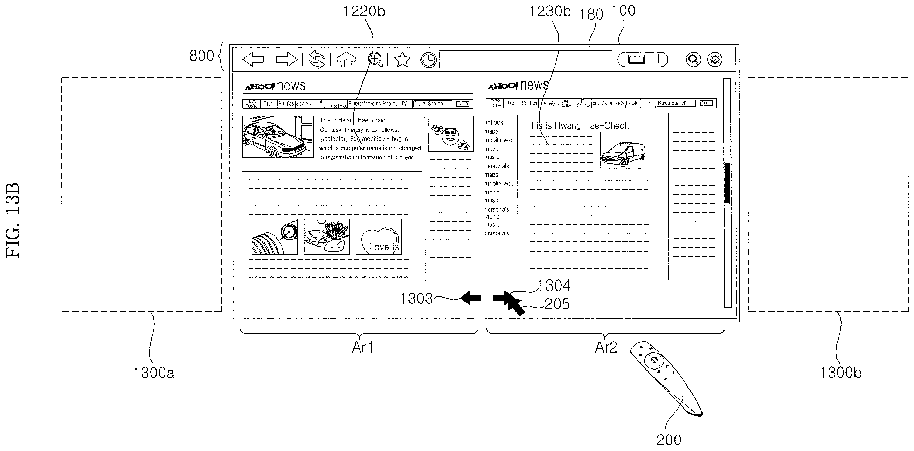

That is, the first and second webpages 1220b and 1230b can be displayed side by side, as shown in FIG. 13B.

When the item 1304 for shifting to the next webpage is selected through the pointer 205, the webpage displayed after the first and second webpages 1220b and 1230b can be displayed.

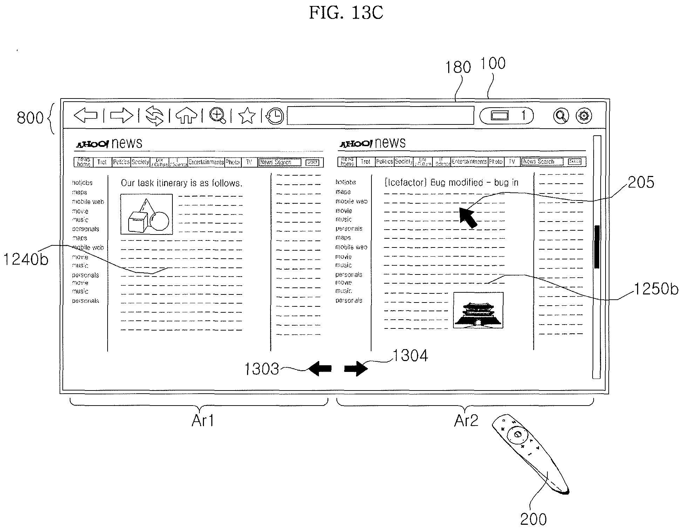

That is, the third and fourth webpages 1240b and 1250b can be displayed side by side, as shown in FIG. 13C.

Further, the controller 170 may control a single webpage to be divided into regions and displayed.

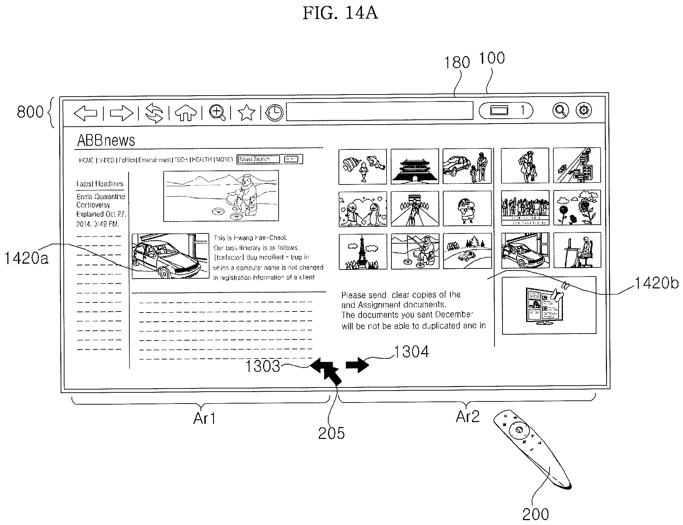

FIG. 14A illustrates a case in which the first and second webpages 1420a and 1420b with respect to a first website are displayed side by side.

Here, the first webpage 1420a and the second webpage 1420b are obtained by dividing one webpage. The upper part of the one webpage may be displayed as the first webpage 1420a at the left side and the lower part thereof may be displayed as the second webpage 1420b at the right side.

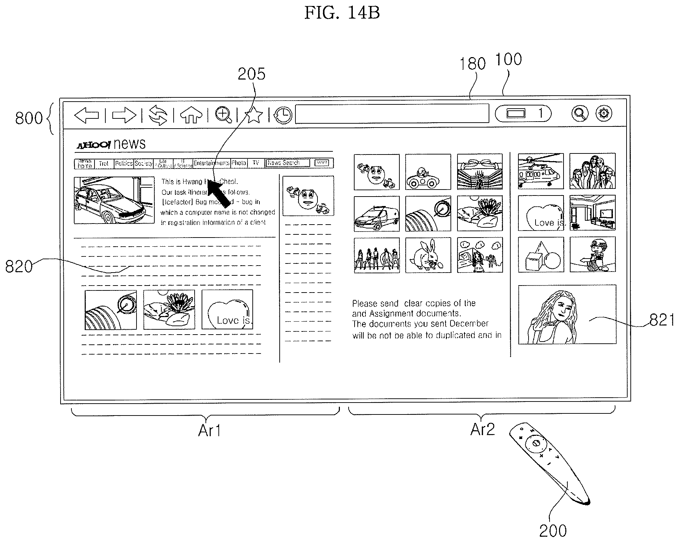

When the item 1303 for shifting to the previous webpage is selected through the pointer 205, a first webpage 820 and the second webpage 821 with respect to a second web site may be displayed side by side, as shown in FIG. 14B.

Here, the first webpage 820 and the second webpage 821 are obtained by dividing one webpage. The upper part of the one webpage may be displayed as the first webpage 820 at the left side and the lower part thereof may be displayed as the second webpage 821 at the right side.

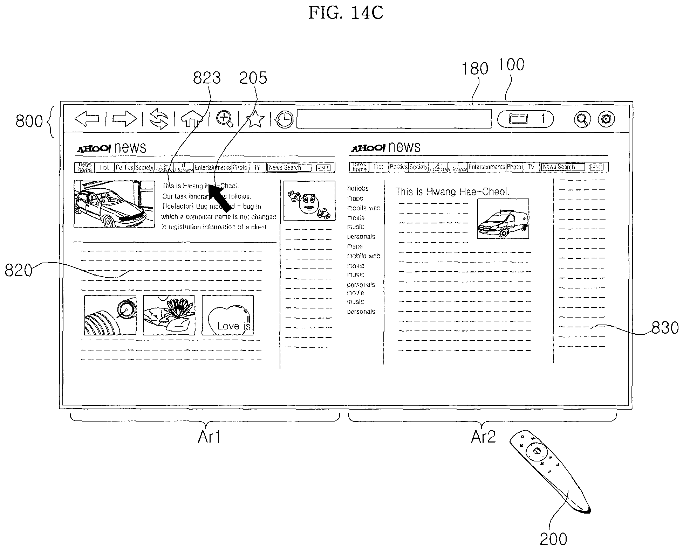

In this state, when a first link item 823 in the first webpage 820 is selected through the pointer 205, the first webpage 820 may be displayed in the first area Ar1 and the second webpage 830 corresponding to the first link item 803 may be displayed in the second area Ar2 adjacent to the first area Ar1, as shown in FIG. 14C.

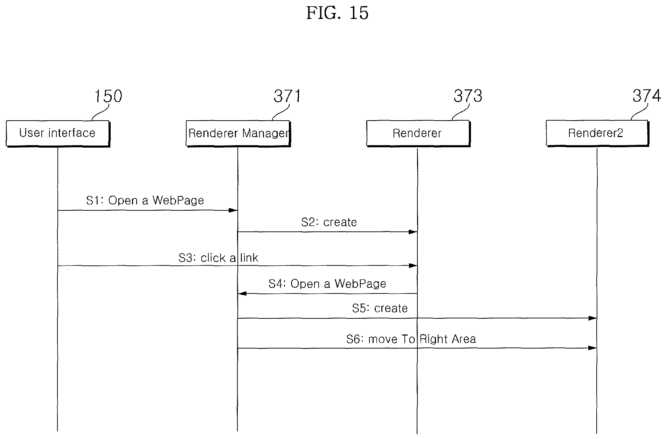

FIG. 15 illustrates a procedure of rendering the aforementioned web page.

When a first signal S1 is input through the user input interface 150, a renderer manager 371 outputs a second signal S2 to a renderer 373 to create a webpage. Accordingly, a predetermined webpage is rendered by the renderer 373 and output.

When a third signal S3 for selecting a link item in the displayed webpage is input through the user input interface 150, the renderer 373 outputs a fourth signal S4 for a webpage open request to the renderer manager 371.

Then, the renderer manager 371 outputs a fifth signal S5 for creating a new webpage to a second renderer 374. Accordingly, a new webpage corresponding to the link is rendered by the second renderer 374 and output.

Here, the renderer manager 371 may output a signal S6 for movement and display to the second renderer 374 for display of an added new manager.

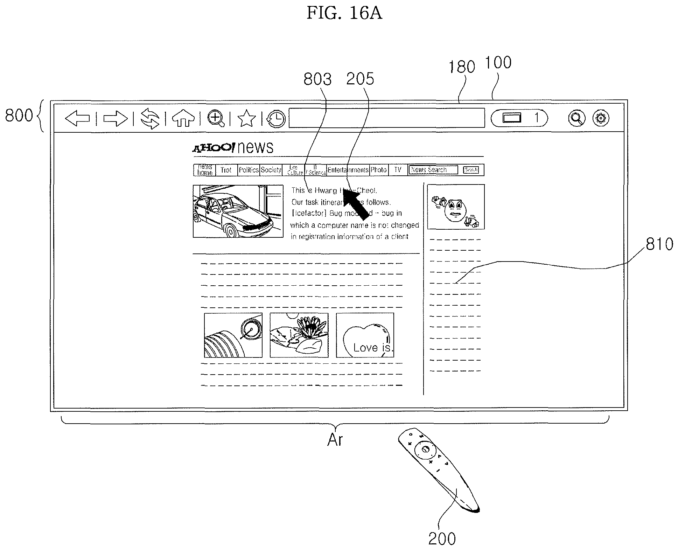

FIG. 16A illustrates display of the first webpage 810 including a plurality of link items as a full screen in the entire area Ar of the display 180.

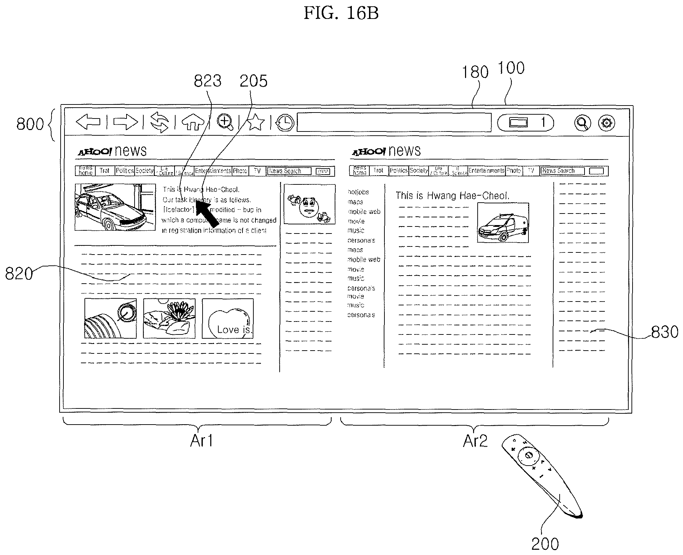

When the first link item 803 is selected through the pointer 205 in a state in which the first webpage 810 including a plurality of items is displayed, as shown in FIG. 16A, the first webpage 820 may be displayed in the first area Ar1 and the second webpage 830 corresponding to the first link item 803 may be displayed in the second area Ar2 adjacent to the first area Ar1, as shown in FIG. 16B.

When the second link item in the first webpage is selected in the state in which the first and second webpages are displayed, the controller 170 may control the third webpage corresponding to the second link item in the first webpage to be additionally displayed side-by-side with the first and second webpages.

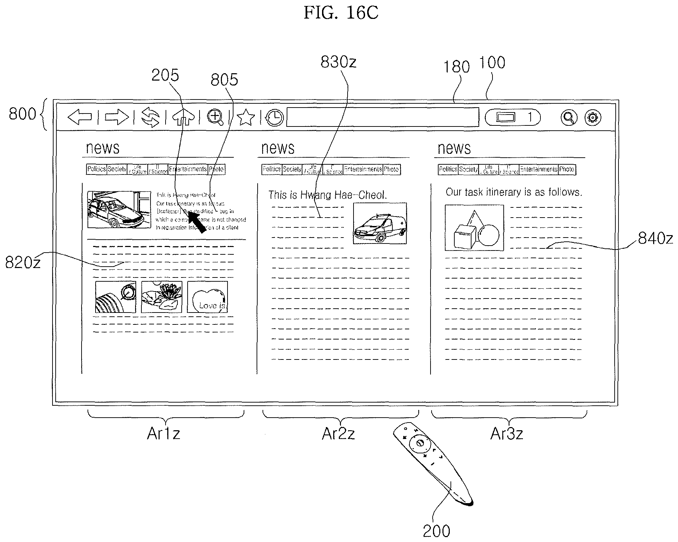

When the second link item 823 in the first webpage 820 is selected through the pointer 205 in the state in which the first and second webpages 820 and 830 are displayed, as shown in FIG. 16B, the first webpage 820z may be displayed in an area Ar1z, the second webpage 830z may be displayed in an area Ar2z, and the third webpage 840z may be displayed in an area Ar3z, as shown in FIG. 16C.

When a third link item in the first webpage is selected in a state in which first to third webpages are displayed, the controller may control the fourth webpage corresponding to the third link item in the first webpage to be displayed in one of four divided upper, lower, left and right areas in addition to the first to third webpages.

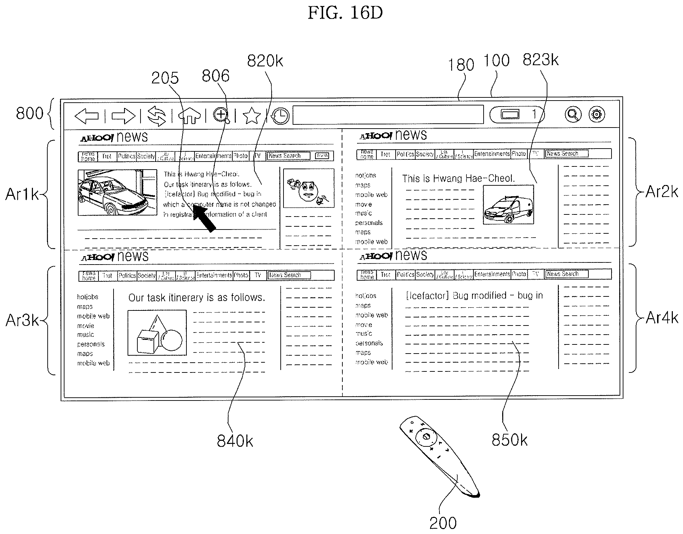

When the third link item 805 in the first webpage 820z is selected through the pointer 205 in the state in which the first to third webpages 820z, 830z and 840z are displayed, as shown in FIG. 16C, the first to fourth webpages 820k, 830k, 840k and 850k may be displayed in the four divided upper, lower, left and right areas Ar1k, Ar2k, Ar3k and Ar4k, as shown in FIG. 16D.

When a fourth link item in the first webpage is selected in the state in which the first to fourth webpages are displayed, the controller 170 may display an additional webpage display restriction message or control a fifth webpage corresponding to the fourth link item in the first webpage to be displayed at the position of one of the first to fourth webpages.

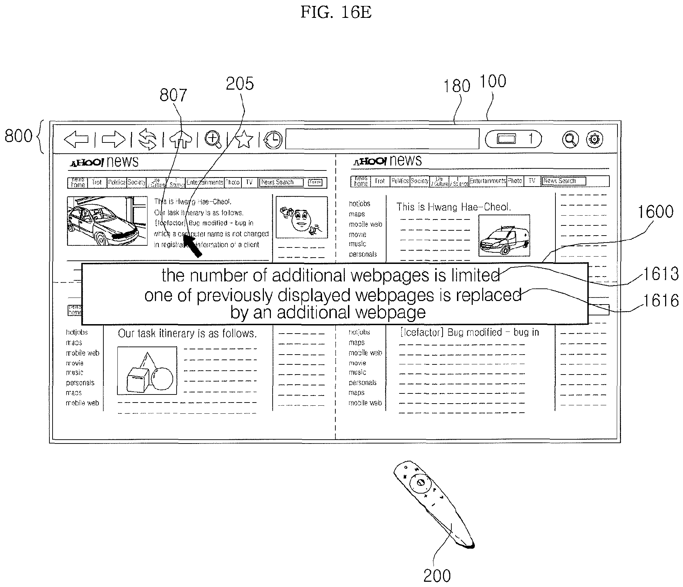

When the fourth link item 806 in the first webpage 820k is selected through the pointer 205 in the state in which the first to fourth webpages 820k, 830k, 840k and 850k are displayed, as shown in FIG. 16D, the additional webpage display restriction message 1600 may be displayed, as shown in FIG. 16E.

The figure illustrates a case in which a message 1613 indicating that the number of additional webpages is limited and a message 1616 indicating that one of previously displayed webpages is replaced by an additional webpage are displayed as the additional webpage display restriction message 1600. Accordingly, the user can recognize that the number of displayed webpages is limited.

The image display device operating method of the present invention may be implemented as code that can be written to a processor-readable recording medium and can thus be read by a processor. The processor-readable recording medium may be any type of recording device in which data can be stored in a processor-readable manner. Examples of the processor-readable recording medium include a ROM, a RAM, a CD-ROM, a magnetic tape, a floppy disk, optical data storage, and a carrier wave, e.g., data transmission over the Internet. Furthermore, as the processor-readable recording medium is distributed to a computer system connected via a network, processor-readable code may be saved and executed in a distributive manner.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

### [Industrial Applicability]

The present invention is applicable to image display devices and, particularly, to image display devices capable of displaying a plurality of webpages on a single screen.

## Claims

1. An image display device comprising:
a display;
an interface to exchange data with an external server; and
a controller to execute a web browser according to a web screen display input, to control a first webpage to be displayed on the display based on data received from the server, and when a first link item in the first webpage is selected, to control the first webpage to be displayed in a first area, and to control a second webpage corresponding to the first link item to be displayed in a second area adjacent to the first area.

2. The image display device according to claim 1, wherein the controller controls the position of the first webpage, displayed when the first webpage is displayed, to move to the left and controls the second webpage to be arranged at the right side of the first webpage when the first and second webpages are displayed.

3. The image display device according to claim 2, wherein the controller controls a third webpage corresponding to a second link item in the first webpage to be displayed at the display position of the second webpage when the second link item is selected.

4. The image display device according to claim 2, wherein the controller controls the first webpage from among the first and second webpages displayed on the display to move to the right such that only the first webpage is displayed when a rewind item is selected.

5. The image display device according to claim 1, wherein the controller controls a pointer to be displayed on the display based on a pointing signal from a remote controller,
wherein, when the pointer is located in one of the first and second webpages, the controller controls the webpage in which the pointer is located to increase in size.

6. The image display device according to claim 1, wherein the controller controls a pointer to be displayed on the display based on a pointing signal from a remote controller,
wherein, when the pointer is moved from the first webpage to the second webpage, the controller controls the second webpage to be enlarged and displayed.

7. The image display device according to claim 1, wherein the controller controls a pointer to be displayed on the display based on a pointing signal from a remote controller,
wherein, when the pointer remains on the second webpage from among the first and second webpages for a second time or longer, the controller controls luminance of the first webpage to decrease.

8. The image display device according to claim 6, wherein, when the pointer is moved from the first webpage to the second webpage and then moved to the first webpage, the controller controls the enlarged second webpage to decrease in size such that the first and second webpages have the same size or the first webpage is larger than the second webpage.

9. The image display device according to claim 1, wherein the controller controls a pointer to be displayed on the display based on a pointing signal from a remote controller,
wherein, when the pointer remains on the first webpage from among the first and second webpages for a first time or longer, the controller controls the first webpage from among the first and second webpages displayed on the display to move to the right such that only the first webpage is displayed.

10. The image display device according to claim 1, wherein, when a link item in the second webpage is selected, the controller controls a third webpage corresponding to the link item in the second webpage to be additionally displayed along with the first and second webpages.

11. The image display device according to claim 10, wherein, when a link item in the second webpage is selected, the controller controls the first and second webpages to be displayed at the position of the first webpage when only the first and second webpages are displayed and controls the third webpage to be displayed at the position of the second webpage when only the first and second webpages are displayed.

12. The image display device according to claim 1, wherein the controller controls the first webpage to be displayed as a mini map at the left side and controls the second webpage to be displayed at the right side of the second webpage when the first and second webpages are displayed together.

13. The image display device according to claim 12, wherein, when a second link item in the first webpage displayed as the mini map is selected, the controller controls a third webpage corresponding to the link item in the second webpage to be additionally displayed along with the first and second webpages.

14. The image display device according to claim 1, wherein the controller controls an item for shifting to a previous webpage and an item for shifting to a next webpage to be displayed and, when the item for shifting to a next webpage is selected in a state in which the first and second webpages are displayed, controls third and fourth webpages to be displayed at display positions of the first and second webpages.

15. The image display device according to claim 1, wherein, when a second link item in the first webpage is selected in a state in which the first and second webpages are displayed, the controller controls a third webpage corresponding to the second link item in the first webpage to be additionally displayed side-by-side with the first and second webpages.

16. The image display device according to claim 15, wherein, when a third link item in the first webpage is selected in a state in which the first to third webpages are displayed, the controller controls a fourth webpage corresponding to the third link item in the first webpage to be additionally displayed in one of four divided upper, lower, left and right areas in addition to the first to third webpages.

17. The image display device according to claim 16, wherein, when a fourth link item in the first webpage is selected in a state in which the first to fourth webpages are displayed, the controller displays an additional webpage display restriction message or controls a fifth webpage corresponding to a fourth link item in the first webpage to be displayed at the position of one of the first to fourth webpages.

18. An image display device comprising:
a display;
an interface to exchange data with an external server; and
a controller to execute a web browser according to a web screen display input, to control a first webpage to be displayed as a full screen on the display based on data received from the server, and when a first link item in the first webpage is selected, to control the first webpage to be decreased in size and displayed in a left area of the display, and to control a second webpage corresponding to the first link item to be displayed in a right area of the display adjacent to the first area.
